# EUROPEAN PATENT SPECIFICATION

(11) **EP 1 435 797 B1**
(45) Date of publication and mention of the grant of the patent: **22.08.2007**
(21) Application number: 02775108.0
(22) Date of filing: 15.10.2002
(51) Int. Cl.: A23L 1/22, A23L 1/0532, A23L 3/46, A23L 1/05, A23P 1/04

(54) **SPRAY-DRIED COMPOSITIONS AND METHOD FOR THEIR PREPARATION**
SPRÜHGETROCKNETE ZUBEREITUNGEN UND VERFAHREN FÜR DEREN HERSTELLUNG
COMPOSITIONS SECHEES PAR PULVERISATION ET PROCEDE SERVANT A LEUR PREPARATION

(30) Priority: 18.10.2001 US 982648
(43) Date of publication of application: 14.07.2004
(73) Proprietor: FIRMENICH SA, 1211 Genève 8 (CH)
(72) Inventor: SUBRAMANIAM, Anandaraman, East Windsor, NJ 08520 (US); McIVER, Robert, Clark, Tabernacle, NJ 08088 (US); VLAD, Florin, Joseph, Annandale, NJ 08801 (US); BENCZEDI, Daniel, 1228 Plan-Les-Ouates (CH)
(74) Representative: Salvaterra-Garcia, Maria de Lurdes
(86) International application number: PCT/IB2002/004312
(87) International publication number: WO 2003/032749

(56) References cited:
- EP-A- 1 106 081
- EP-A- 1 208 754
- WO-A-00/25606
- GB-A- 911 483
- GB-A- 929 409
- US-A- 3 205 175
- US-A- 5 124 162
- US-A- 5 709 895

## Description

### Technical field

The present invention relates to compositions in an encapsulated form and to a method for the preparation of said compositions.

An encapsulation is a process by which one or more active ingredients are coated with, or entrapped within, another material or system. In the flavor industry, the encapsulation of flavor ingredients serves to retain the aroma in a food product during storage, protects the flavor from undesirable interactions with the food, minimizes flavor/flavor interactions, guards against either light induced reactions or oxidation, and provides a controlled release of the flavor.

In this industry, the most common processes for producing encapsulated products are spray-drying and, to a lesser extent, extrusion and coacervation.

### Background Art

Spray-drying is a well-known useful technique to stabilize flavors by encapsulating them in a solid form, suited to many applications.

In spray-dried powders, an active ingredient such as a flavor or a fragrance, usually hydrophobic, is entrapped as liquid droplets in a solidified matrix of a dehydrated carrier, generally consisting of carbohydrates, such as starches, hydrolyzed starches (maltodextrin), chemically modified starches, emulsifying polymers (gum arabic) and in certain instances monomers and dimers of simple aldohexoses, or any combination thereof. Conventional spray-drying techniques are perfectly well documented in the prior art. See for example Spray-Drying Handbook, 4th ed., K. Masters, (1985) or other reference books on the subject-matter.

The method for the preparation of a spray-dried powder typically first comprises dispersing a carrier in water, and then mixing this dispersion with a flavor before homogenizing to form an oil-in-water emulsion. The emulsion is then spray-dried to produce a powdered flavor.

Flavors are traditionally spray-dried in water-soluble carbohydrate matrices. As these matrices dissolve in water readily, the most common applications of the corresponding powdered flavors are dry beverage formulations. However, other applications in the flavor industry as well as in other fields such as the perfumery or the pharmaceutical domains require spray-dried products having a behavior in an aqueous environment different from traditional spray-dried powders. In particular, powders which are able to dissolve in water more slowly than most spray-dried products available today and which may even require a mechanical trigger for the release of the active ingredient encapsulated in the matrix, could be very useful for many applications.

Means to improve the dispersion of typical spray-dried powders have already been described in the prior art. Agglomeration constitutes such a means and finds applications for instance in instant coffee. However, this process does not suit all applications.

Now, we have been able to establish that a particular ingredient can be added to the carrier constituting the matrix of a spray-dried product, and, in combination with a wall-forming carbohydrate material, surprisingly improve the behavior of the powder in an aqueous or highly moist environment. This ingredient is agar agar.

Agar agar is a hydrocolloid, the physical properties of which are well known in the art. More particularly, it has a widespread use in foods as a stabilizer, thickener, humectant and surface finisher.

Some patent literature discloses the spray-drying of agar itself to provide it in a solid form. On the other hand, agar is often cited as part of the list of encompassing materials susceptible of constituting carriers in an encapsulation system. As an example, one can cite WO 98/33394 which discloses the mixture of a bulking agent with a hydrocolloid in the form of a solid powder which is used as a stabilizing agent in a wide variety of products. Agar Agar has also been disclosed in US 3205175 and GB 911483 as part of a list of materials that can be used in coacervation processes. However, no document from the prior art has ever pointed out or even suggested the possibility of using agar in a spray-dried composition for a specific purpose, when used in defined amounts and in combination with a carbohydrate material.

For instance, in US 5 124 162 volatile substances are fixed in an amorphous substrate which contains film-forming carbohydrates, without any mention of agar agar . In EP 1 106 081 high levels of film-forming carbohydrates are required, namely 45-70% of the matrix, to be compared with 1-30% as required by the present invention.

Yet, we have now been able to establish that, in combination with the main carrier material, namely a carbohydrate, and when used in specific amounts, agar agar is an advantageous co-carrier material for a composition intended to be spray-dried. In an unexpected manner, this novel composition proved to be responsible for a complete change in the product's behavior, in an aqueous or highly moist environment, and as regards the release characteristics of the active ingredient there-encapsulated, compared with conventional spray-dried powders.

### Disclosure of Invention

One object of the invention is thus a novel spray-dried composition, comprising one or more active ingredients dispersed in a carrier which comprises at least one wall-forming carbohydrate material and from 1 to 30% by weight of agar agar, relative to the dried weight of the composition.

What is meant here by "active ingredient", is a liquid ingredient, preferably hydrophobic, which is sought to be protected by way of solid encapsulation. It may include volatile perfuming or flavoring ingredients, as well as other kinds of ingredients such as pharmaceutical actives for instance.

The system of the invention presents many advantages. While a typical spray-dried product dissolves instantly in water, the composition according to the present invention behaves in a totally different manner in such a medium and makes it possible to provide a controlled release of the encapsulated active ingredient.

A second object of the present invention is a method for the preparation of such a spray-dried composition, and a further object, its use for the flavoring or perfuming of consumer products such as foods, beverages, or perfuming compositions.

Finally, the spray-dried powder of the invention can also be advantageously used as an intermediate product or starting product for a double-encapsulation method, i.e. as a solid product susceptible of being subjected to a further encapsulation such as an extrusion in a glassy matrix to provide a granular delivery system, or to a second spray-drying operation in a distinct or similar matrix.

More objects, aspects and advantages of the invention will become apparent from the detailed description hereafter.

The present invention thus concerns a composition in the form of a spray-dried powder, comprising one or more active ingredients dispersed in a carrier, wherein said carrier comprises at least one wall-forming carbohydrate material and from 1 to 30% of agar agar, relative to the dried weight of the composition. In another embodiment, the proportion of agar agar in the composition can be limited to 1 to 20%, or even to 1 to 15% by weight, relative to the dried weight of the composition.

The spray-dried product of the invention turned out to be very useful in particular in an aqueous environment, where it provides a release of the active ingredient which is quite distinct from typical systems known in the prior art. More particularly, the addition of a certain amount of agar agar in the carrier matrix, in combination with a wall-forming carbohydrate material, proved to provide a structure which swells almost instantly upon hydration and forms a gel, wherein the mobility of the active ingredient, in the form of oil droplets, is restricted. As a consequence, even when excess water is present, the gel containing the oil droplets remains intact. Therefore, if the hydrated powder particles are left undisturbed, i.e. are not subjected to constant shear at room temperature, they can retain their integrity for at least 2 weeks, after which the release of the oil from the hydrated particles, when deformed under pressure, is observable. Thus, while typical spray-dried products dissolve instantaneously in an aqueous environment, providing an instant release of the encapsulated active ingredient, the system of the invention provides a controlled release of the active substance. Under another kind of trigger such as shear force or heat, the active substance will be released from the dry powder.

The spray-dried powder of the invention also presents a particularly advantageous stability in a medium of high relative humidity. Therefore, contrary to powders known up to date, the delivery system of the invention can be stored or be subjected to transportation while protecting in an effective way the active ingredient there-encapsulated.

The carrier of the spray-dried composition comprises at least one wall-forming carbohydrate material and from 1 to 30% of agar agar which may be in a partially hydrated form. This combination is responsible for the technical effect here-above described.

Suitable wall-forming carbohydrate materials are substrates such as polyvinyl acetate, polyvinyl alcohol, dextrines, natural or modified starch, pectins, xanthanes, alginates, or yet cellulose derivatives such as for example carboxymethyl cellulose, methyl cellulose or hydroxyethylcellulose. In one particular embodiment of the invention, the carbohydrate material is selected from the group consisting of a maltodextrin, a corn syrup, a chemically modified starch, a hydrogenated starch hydrolysate and a succinylated or hydrolyzed starch.

The composition of the invention typically comprises from 70 to 99% by weight, relative to the dried weight of the composition, of wall-forming carbohydrate material. Preferably, it contains from 40 to 80% of carbohydrate material.

In a preferred embodiment, the matrix composition further comprises a plasticizer such as a sugar or sugar derivative, such as sucrose, glucose, lactose, levulose, fructose, maltose, ribose, dextrose, isomalt, sorbitol, mannitol, xylitol, lactitol, maltitol, pentatol, arabinose, pentose, xylose, galactose. Typically, the compositions of the invention may comprise from 0.01 to 50% by weight, relative to the weight of the dried product, of plasticizer.

An agar agar matrix, futher comprising maltodextrin in admixture with one of the sugars mentioned above, in particular sucrose, is particularly appreciated.

In addition to carbohydrates and plasticizers, the composition of the invention may comprise an emulsifier intended to promote a homogeneous mix of the oil in the carbohydrate based mixture before spray-drying. The nature and proper amount of the emulsifier can be critically assessed by the process operator without undue experimentation. Typically, proportions from 1 to 30% by weight, relative to the dried weight of the composition, can be used.

Many suitable emulsifiers are known in the commerce. Typical examples include soya lecithin, Capsul^{®} (modified maize starch from National Starch), citric acid esters of fatty acids and emulsifying polymers such as gum arabic, but other suitable emulsifiers are cited in reference texts such as Food Emulsifiers and their Applications, 1997, edited by G.L. Hasenhuettl and R.W. Hartel, USA.

Finally, the composition of the invention, which is initially in the form of an aqueous emulsion, contains, before being spray-dried, from 50 to 90% of water, preferably from 60 to 85% by weight of water, relative to the total weight of the emulsion.

The active ingredient dispersed in the carrier of the spray-dried composition of the invention will preferably be a hydrophobic flavor or fragrance ingredient or composition of current use. However, the polarity or aqueous solubility of the active ingredient may be chosen as a function of the desired retardation of the release for a given application. In fact, more hydrophilic components will be released faster, as they are able to partition in the outer aqueous phase.

The terms "flavor and fragrance ingredient or composition" as used herein are deemed to define a variety of flavor and fragrance materials of both natural and synthetic origin. They include single compounds and mixtures. The composition of the invention can encapsulate volatile or labile components in liquid form, preferably hydrophobic. Specific examples of such components may be found in the current literature, e.g. in Fenaroli's Handbook of Flavor Ingredients, 1975, CRC Press; Synthetic Food Adjuncts, 1947 by M.B. Jacobs, edited by Van Nostrand ; or Perfume and Flavor Chemicals by S. Arctander 1969, Montclair, N.J. (USA). These substances are well known to the person skilled in the art of perfuming, flavoring, and/or aromatizing consumer products, i.e. of imparting an odor and/or a flavor or taste to a consumer product traditionally perfumed or flavored, or of modifying the odor and/or taste of said consumer product.

Natural extracts can also be encapsulated into the system of the invention ; these include e.g. citrus extracts such as lemon, orange, lime, grapefruit or mandarin oils, or coffee, tea, mint, cocoa, vanilla or essential oils of herbs and spices, amongst other.

The proportions of active ingredient in the composition are comprised between 0.1 to 60% by weight, relative to the dried weight of the composition. In a particular embodiment, the proportion of the active ingredient is comprised between 20 and 50%.

Another object of the invention is a method for the preparation of a spray-dried powder, which comprises the steps of emulsifying the active ingredient with an aqueous solution of the matrix carrier comprising at least one wall-forming carbohydrate material and from 1 to 30%, or from 1 to 20% or even from I to 15% of agar agar ; homogenizing the emulsion and spray drying the latter to form a particulate product.

One particular advantage of the process according to the invention lies in the fact that the compositions comprising a combination of agar agar with a carbohydrate, as here-described, demonstrate a retention of the active ingredient (oil) which is advantageously not affected by a variation in the solid content of the starting aqueous emulsion. More particularly, in classical spray-drying processes, a high dilution rate, useful to provide monodispersity of the powder, must be balanced with the fact that the higher is the dilution rate, the lower will be the flavor retention. It is furthermore established that 10% lower solid content in the initial aqueous emulsion should result in noticeably decreasing the flavor retention after spray-drying. Now, it turned out in the present case that, as shown in the examples below, the flavor retention of the product of the invention is not affected by the dilution rate, or solid content in the aqueous emulsion introduced into the spray-drier. In other words, high dilution rates may be employed in order to get a good monodispersity of the powder without provoking any drawback on the flavor retention, which is a totally unexpected result.

The spray-drying apparatus used in the process of the invention can be any of the various commercially available apparatus. Examples of spray-drying apparatuses are the Anhydro Dryers (origin : Anhydro Corp. of Attleboro Falls, Mass.), the Niro Dryer (manufactured by Niro Atomizer Ltd., Copenhagen, Denmark), or a Leaflash apparatus (origin : CCM Sulzer). Preferably a spray-drier with a pressure nozzle is used.

The process will be described in a more detailed manner in Example 1. However, the parameters characteristic of a spray-drying process are well known in the art and can be easily adjusted by a skilled person in the art.

The particulates of the invention have typically a size comprised between 50 and 70 µm and a bulk density comprised between 0.4 and 0.6 g/cm³. However, a skilled person in the art knows well that the granulometry and the bulk density of the resulting dry powders can be adjusted by selecting the nozzle pressure until the powder having the desired flowability is obtained.

The spray-dried powders prepared according to a process of the invention can be utilized as such in applications, for instance for the perfuming or flavoring of compositions wherein a release is induced by shear or heat. However, they also can be advantageously used as starting materials to be subjected to further processing, before being used as delivery systems in a variety of applications.

In particular, in one embodiment of the invention, the spray-dried particles obtained by the method here-above described, are further encapsulated in an extruded glassy matrix which may be formed from one or more carbohydrate materials or which may just comprise a plasticizer and an emulsifying agent, in order to produce a glassy matrix with an improved thermal stability. US 5,087,461, the contents of which is hereby included by reference, describes and exemplifies an encapsulation method of a spray-dried composition by way of extrusion. This process leads to narrow rods having a diameter in the range of 0.3 to 3 mm.

Apart from the extrusion, other kinds of encapsulation processing, following the spray-drying, are possible. The powder obtained can for instance be submitted to a second spray-drying, thus providing a two-stage spray-dried product. This technique in particular, as well as multi-stage spray-drying in general, are described by W.J. Coumans, P.J.A.M. Kerkhof and S. Bruin in Drying Technology, Vol. 12 (1 and 2), (1994), the teaching of which is hereby included by reference.

These examples are not restrictive of the encapsulation techniques which can be used for further processing of the spray-dried powder obtained according to the present invention, notably with the aim of increasing the size of the particles, or improving a particular characteristic of the powder, in order to rend it suitable for specific applications.

The products of the invention, namely the spray-dried powder as such, as well as the spray-dried compositions further subjected to a second kind of encapsulation can be advantageously used for instance for the perfuming or flavoring of food compositions in particular.

Therefore, the delivery systems of the invention can be used in applications such as chewing gums or chewing sweets, savoury food or baking in the field of flavours. Similarly the field of perfumery comprises many applications where this kind of encapsulation systems may be very useful. For instance all kinds of deodorants and antiperspirants constitute suitable applications for a perfuming delivery system with a controlled release of the perfuming ingredient and wherein the integrity of the latter is desirable until consumer use of for a certain period of time.

The powder of the invention may also be advantageously used for perfuming powder bases such as detergent bases. In fact, as shown in a comparative example below, the encapsulation system here-disclosed presents a very good stability towards moisture or relative humidity and these products can therefore be stored during a long period of time before being used, without being subjected to a degradation of the encapsulated perfume.

In those applications, the compositions of the invention provide a flavor or fragrance retention of up to 85% after the encapsulation process, at a fix level as high as 50%, and in an unexpected manner, the flavor retention being independent of the solid content of the aqueous emulsion introduced into the spray-drier. Moreover, the product hydrates very slowly in water and does not dissolve up to two weeks.

The invention will be now described in a more detailed manner in the examples below, wherein the temperatures are indicated in degrees Celsius and the abbreviations have the usual meaning in the art.

### Modes of Carrying out the Invention

### Example 1

### Preparation of a spray-dried composition according to the invention

### Formulation :

| Ingredients | Grams | % dry |
|---|---|---|
| Maltodextrin 18DE | 1729 | 24.70 |
| Sucrose | 1729 | 24.70 |
| Agar agar | 700 | 10.00 |
| Lemon oil ¹⁾ | 2800 | 40.00 |
| Lecithin | 42 | 0.60 |
| Water | 13600 | |
| Total | | 100.00 |

| | | |
|---|---|---|
| 1) origin : Firmenich Citrus Center, Florida, USA | | |

### Preparation :

A batch was prepared by hydrating agar agar in water (approximately 10% solids level) and subsequently mixing it with the rest of the ingredients in a stainless kettle equipped with pneumatic agitation. The batch temperature was maintained at 65-70°. When the contents of the kettle were uniform, it was homogenized at 7000 kPa.

The prepared feed was dried with a Leaflash apparatus characterized by the respective inlet /outlet temperatures of 180/80°; a feed pressure of 17x10³ Pa ; and a nozzle 70/216 (spraying system) (diameter of spray orifice/spinner nozzle).

Samples were collected and analyzed for oil content by steam distillation. The flavor retention of the particulates after the process was of 85% (solid content of the aqueous emulsion introduced into the spray-drier of 33.98%).

Hydration characteristics and oil droplets release were investigated by microscopy. Thus, after 2 weeks in water, no oil coming out of the powder was observed. The particulates were intact.

### Example 2

### Preparation of a spray-dried composition according to the invention

### Formulation :

| Ingredients | Grams | % dry |
|---|---|---|
| Maltodextrin 18DE | 1379 | 19.70 |
| Sucrose | 1379 | 19.70 |
| Agar agar | 700 | 10.00 |
| Lemon oil ¹⁾ | 3500 | 50.00 |
| Lecithin | 42 | 0.60 |
| Water | 15200 | |
| Total | | 100.00 |

| | | |
|---|---|---|
| 1) see Example 1 | | |

### Preparation : The spray-dried powder was prepared as described in Example 1.

The final product (after the process) had a flavor retention of 87.80% (solid content of the aqueous emulsion introduced into the spray-drier of 31.53%). No oil droplets diffused from the particles after 2 weeks in water.

### Example 3

### Preparation of a spray-dried composition according to the invention

### Formulation:

| Ingredients | Grams | % dry |
|---|---|---|
| Maltodextrin 18DE | 1554 | 22.20 |
| Sucrose | 1554 | 22.20 |
| Agar agar | 1050 | 15.00 |
| Lemon oil ¹⁾ | 2800 | 40.00 |
| Lecithin | 42 | 0.60 |
| Water | 23200 | |
| Total | | 100.00 |

| | | |
|---|---|---|
| 1) see Example 1 | | |

### Preparation : The spray-dried powder was prepared as described in Example 1.

The final product (after the process) had a flavor retention of 85.30% (solid content of the emulsion introduced into the spray-drier of 23.18%).
No oil droplets diffused from the particles after 2 weeks in water.

### Example 4

### Preparation of a spray-dried composition according to the invention

### Formulation :

| Ingredients | Grams | %dry |
|---|---|---|
| Maltodextrin 18DE | 798 | 11.40 |
| Sucrose | 1554 | 22.20 |
| Agar agar | 1050 | 15.00 |
| Gum Arabic | 798 | 11.40 |
| Lemon oil ¹⁾ | 2800 | 40.00 |
| Water | 18200 | |
| Total | | 100.00 |

| | | |
|---|---|---|
| 1) see Example 1 | | |

### Preparation : The spray-dried powder was prepared as described in Example 1.

The final product (after the process) had a flavor retention of 87.00% (solid content of the emulsion introduced into the spray-drier of 27.78%).
No oil droplets diffused from the particles after 2 weeks in water.

### Example 5

### Preparation of a spray-dried composition according to the invention

### Formulation :

| Ingredients | Grams | % dry |
|---|---|---|
| Maltodextrin 18DE | 2079 | 29.70 |
| Sucrose | 2079 | 29.70 |
| Agar agar | 700 | 10.00 |
| Fragrance ¹⁾ | 2100 | 30.00 |
| Lecithin | 42 | 0.60 |
| Water | 13600 | |
| Total | | 100.00 |

| | | |
|---|---|---|
| 1) origin : Firmenich SA, Geneva, Switzerland | | |

### Preparation : The spray-dried powder was prepared as described in Example 1.

The final product (after the process) had a flavor retention of 100% (solid content of the emulsion introduced into the spray-drier of 33.98%).
No oil droplets diffused from the particles after 2 weeks in water.

### Example 6

### Spray-dried composition of the invention, further extruded in a glassy matrix

A spray-dried composition was prepared as described in Example 1 from the following formulation :

| Ingredients | % dry |
|---|---|
| Maltodextrin 18 DE | 84 |
| Agar agar | 5 |
| Orange oil | 1 |
| Citrem | 5 |
| Neobee | 5 |
| Total | 100 |

The obtained powder was extruded under 2x10⁵ Pa pressure through a die plate with 0.8 mm diameter holes at a temperature of 95°.

### Example 7

### Comparative example on the stability of a spray-dried composition according to the invention, in a detergent base

Two spray-dried compositions having the following formulations were prepared according to the method described in Example 1 :

### Formulation A :

| Ingredients | Grams | % dry |
|---|---|---|
| Maltodextrin 18DE | 2865 | 38.20 |
| Sucrose | 2865 | 38.20 |
| Perfume composition ¹⁾ | 1500 | 20.00 |
| Agar agar | 225 | 3.00 |
| Lecithin | 45 | 0.60 |
| Water Total | 9600 | 100.00 |

| | | |
|---|---|---|
| 1) composition consisting of a mixture of benzyl acetate, phenylethyl acetate, cyclamen aldehyde, Lilial® (origin: Givaudan-Roure, Vernier, Switzerland) and hexyl salicylate ; each ingredient being present in the same weight percentage in the composition | | |

### Formulation B :

| Ingredients | Grams | % dry |
|---|---|---|
| Maltodextrin 18DE | 2977.5 | 39.70 |
| Sucrose | 2977.5 | 39.70 |
| Perfume composition ¹⁾ | 1500.0 | 20.00 |
| Lecithin | 45.0 | 0.60 |
| Water | 9600.0 | |
| Total | | 100.00 |

| | | |
|---|---|---|
| 1) see *Formulation A* | | |

Each powder was independently admixed with a standard European detergent powder with percarbonate-TAED bleaching system. After a four weeks storage at 37° and 70% relative humidity, the two compositions were respectively separated from the detergent, dissolved in water, and diluted with acetonitrile and 2-heptanone. 1 G of the solution thus obtained was dried over 5 g of Na₂SO₄ and the residual liquid phase was analysed by a standard GC-MS analytical method to determine the residual quantity of the various perfuming ingredients. The results were compared with those obtained with a reference detergent, stored for four weeks at 3°, on which the perfume composition was directly sprayed-on. The results are summarised in Table 1.

**Table 1 : Percentage of perfume ingredients recovered after storage for four weeks at 37° and 70% RH**

| Perfuming ingredient | Sprayed-on detergent powder | Formulation B (no agar agar) | Formulation A (3% of agar agar) |
|---|---|---|---|
| Benzyl acetate | 3 | 6 | 6 |
| Phenyl ethyl acetate | 10 | 18 | 23 |
| Cyclamen aldehyde | 31 | 45 | 67 |
| Lilial® | 0.0 | 2 | 10 |
| Hexyl salicylate | 25 | 48 | 100 |

The results reported in Table 1 demonstrate the superiority of the spray-dried composition comprising agar agar which , after a month period of storage, contains the highest proportion of perfuming ingredients which have not been decomposed.

## Claims

1. A spray-dried composition, comprising one or more active ingredients dispersed in a carrier, wherein said carrier comprises at least one wall-forming carbohydrate material and from 1 to 30% by weight of agar agar, relative to the dried weight of the composition.

2. A spray-dried composition according to claim 1, wherein the carrier comprises from 1 to 20% by weight of agar agar, relative to the dried weight of the composition.

3. A spray-dried composition according to claim 1, wherein the carrier comprises from 1 to 15% by weight of agar agar, relative to the dried weight of the composition.

4. A spray-dried composition according to claim 1, wherein the wall-forming carbohydrate material is selected from the group consisting of maltodextrin, corn syrup, chemically modified starch, hydrogenated starch hydrolysate, and succinylated or hydrolyzed starch.

5. A spray-dried composition according to claim 4, wherein the wall forming consists of maltodextrin.

6. A spray-dried composition according to claim 1, which comprises from 0.01 to 50% of a plasticiser selected from the group consisting of a mono- and a disaccharide.

7. A spray-dried composition according to claim 5, which comprises from 0.01 to 50% of a plasticiser selected from the group consisting of a mono- and a disaccharide.

8. A spray-dried composition according to claim 1, which comprises from 1 to 30% by weight of an emulsifier, relative to the dried weight of the composition.

9. A spray-dried composition according to claim 1, wherein the active ingredient is a perfuming ingredient.

10. A spray-dried composition according to claim 1, wherein the active ingredient is a flavoring ingredient.

11. A spray-dried composition according to claim 1, comprising from 1 to 60% of active ingredient relative to the dried weight of the composition.

12. A spray-dried composition according to claim 11, comprising from 20 to 50% of active ingredient relative to the dried weight of the composition.

13. A method for the preparation of a particulate product, comprising the steps of
a) forming an aqueous emulsion of an active ingredient dispersed in a carrier comprising at least one wall-forming carbohydrate material and from 1 to 30% of agar agar ;
b) homogenizing the emulsion ;
c) spray-drying the emulsion to form a particulate product.

14. A method according to claim 13, wherein step c) is carried out by using a spray-drying apparatus equipped with a pressure nozzle.

15. A method according to claim 13, wherein the particulate product formed in step c) is further encapsulated.

16. A method according to claim 15, wherein the encapsulation consists in extruding the particulate product in a glassy matrix to form a granular delivery system.

17. A granular delivery system obtainable by a method according to claim 16.

18. A method according to claim 15, wherein the encapsulation consists in spray-drying the particulate product in order to form a multi-stage spray-dried powder.

19. A multi-stage spray-dried powder obtainable by a method according to claim 18.

20. A method for flavoring a food or beverage product, which comprises adding a spray-dried composition according to claim 10, to said food or beverage product.

21. A method for flavoring or a food, or beverage product, which comprises adding a granular delivery system according to claim 17, to said food or beverage product.

22. A method for improving, enhancing or modifying the fragrance properties of a composition, wherein a spray-drying composition according to claim 9 is added to said composition.

23. A food or beverage product, **characterised in that** it comprises a composition according to claim 10.

24. A perfumed product or article, **characterised in that** it comprises a composition according to claim 9.

25. A perfumed article according to claim 24, in the form of a powdered detergent.

## Patentansprüche

1. Sprühgetrocknete Zusammensetzung, aufweisend einen oder mehrere aktive Bestandteile, die in einem Träger dispergiert sind, wobei der Träger mindestens ein eine Hülle bildendes Kohlenhydratmaterial aufweist, sowie bezogen auf die Trockenmasse der Zusammensetzung 1% bis 30 Gew.% Agar-Agar.

2. Sprühgetrocknete Zusammensetzung nach Anspruch 1, wobei der Träger 1% bis 20 Gew.% Agar-Agar bezogen auf die Trockenmasse der Zusammensetzung aufweist.

3. Sprühgetrocknete Zusammensetzung nach Anspruch 1, wobei der Träger 1% bis 15 Gew.% Agar-Agar bezogen auf die Trockenmasse der Zusammensetzung aufweist.

4. Sprühgetrocknete Zusammensetzung nach Anspruch 1, wobei das eine Hülle bildende Kohlenhydratmaterial ausgewählt ist aus der Gruppe, bestehend aus: Maltodextrin, Maisstärkesirup, chemisch modifizierte Stärke, hydriertes Stärkehydrolysat und succinylierte oder hydrolysierte Stärke.

5. Sprühgetrocknete Zusammensetzung nach Anspruch 4, wobei das eine Hülle bildende Kohlenhydratmaterial aus Maltodextrin besteht.

6. Sprühgetrocknete Zusammensetzung nach Anspruch 1, welche 0,01% bis 50% eines Weichmachers aufweist, der ausgewählt ist aus der Gruppe, bestehend aus einem Mono- und einem Disaccharid.

7. Sprühgetrocknete Zusammensetzung nach Anspruch 5, welche 0,01% bis 50% eines Weichmachers aufweist, der ausgewählt ist aus der Gruppe, bestehend aus einem Mono- und einem Disaccharid.

8. Sprühgetrocknete Zusammensetzung nach Anspruch 1, welche bezogen auf die Trockensubstanz der Zusammensetzung 1% bis 30 Gew.% Emulgiermittel aufweist.

9. Sprühgetrocknete Zusammensetzung nach Anspruch 1, wobei der aktive Bestandteil ein parfümierender Bestandteil ist.

10. Sprühgetrocknete Zusammensetzung nach Anspruch 1, wobei der aktive Bestandteil ein aromatisierender Bestandteil ist.

11. Sprühgetrocknete Zusammensetzung nach Anspruch 1, aufweisend bezogen auf die Trockenmasse der Zusammensetzung 1% bis 60% des aktiven Bestandteils.

12. Sprühgetrocknete Zusammensetzung nach Anspruch 11, aufweisend bezogen auf die Trockenmasse der Zusammensetzung 20% bis 50% des aktiven Bestandteils.

13. Verfahren zum Herstellen eines partikulären Produktes, umfassend die Schritte:
a) Erzeugen einer wässrigen Emulsion eines aktiven Bestandteils, das in einem Träger dispergiert ist, aufweisend mindestens ein eine Hülle bildendes Kohlenhydratmaterial und 1% bis 30% Agar-Agar;
b) Homogenisieren der Emulsion;
c) Sprühtrocknen der Emulsion zur Erzeugung eines partikulären Produktes.

14. Verfahren nach Anspruch 13, wobei Schritt c) ausgeführt wird, indem ein Apparat zum Sprühtrocknen verwendet wird, der mit einer Druckdüse ausgestattet ist.

15. Verfahren nach Anspruch 13, wobei das in Schritt c) erzeugte partikuläre Produkt ferner verkapselt wird.

16. Verfahren nach Anspruch 15, wobei die Verkapselung in einem Extrudieren des partikulären Produkts zu einer glasartigen Matrix unter Erzeugung eines granulären Zuführsystems besteht.

17. Granuläres Zuführsystem, das mit Hilfe des Verfahrens nach Anspruch 16 erhalten werden kann.

18. Verfahren nach Anspruch 15, wobei die Verkapselung im Sprühtrocknen des partikulären Produktes besteht, um ein mehrstufig sprühgetrocknetes Pulver zu erzeugen.

19. Mehrstufig sprühgetrocknetes Pulver, das mit Hilfe eines Verfahrens nach Anspruch 18 erhalten werden kann.

20. Verfahren zum Aromatisieren eines Lebensmittel- oder Getränkeproduktes, welches Verfahren das Zusetzen einer sprühgetrockneten Zusammensetzung nach Anspruch 10 zu dem Lebensmittel- oder Getränkeprodukt umfasst.

21. Verfahren zum Aromatisieren eines Lebensmittel- oder Getränkeprodukts, welches Verfahren das Zusetzen eines granulären Zuführsystems nach Anspruch 17 zu dem Lebensmittel- oder Getränkeprodukt umfasst.

22. Verfahren zum Verbessern, Verstärken oder Modifizieren der Dufteigenschaften einer Zusammensetzung, bei welchem Verfahren eine sprühtrocknende Zusammensetzung nach Anspruch 9 der Zusammensetzung zugegeben wird.

23. Lebensmittel- oder Getränkeprodukt, **dadurch gekennzeichnet, dass** es eine Zusammensetzung nach Anspruch 10 aufweist.

24. Parfümiertes Produkt oder parfümierter Artikel, **dadurch gekennzeichnet, dass** es/er eine Zusammensetzung nach Anspruch 9 aufweist.

25. Parfümierter Artikel nach Anspruch 24 in Form eines pulverförmigen Waschmittels.

## Revendications

1. Composition séchée par pulvérisation, comprenant un ou plusieurs ingrédients actifs dispersés dans un support, dans laquelle ledit support comprend au moins une matière glucidique formant une paroi et de 1 à 30% en poids d'agar-agar, relativement au poids séché de la composition.

2. Composition séchée par pulvérisation suivant la revendication 1, dans laquelle le support comprend de 1 à 20% en poids d'agar-agar, relativement au poids séché de la composition.

3. Composition séchée par pulvérisation suivant la revendication 1, dans laquelle le support comprend de 1 à 15% en poids d'agar-agar, relativement au poids séché de la composition.

4. Composition séchée par pulvérisation suivant la revendication 1, dans laquelle la matière glucidique formant une paroi est choisie dans le groupe constitué de maltodextrine, de sirop de maïs, d'amidon chimiquement modifié, d'hydrolysat d'amidon hydrogéné et d'amidon succinylé ou hydrolysé.

5. Composition séchée par pulvérisation suivant la revendication 4, dans laquelle la matière glucidique formant une paroi est constituée de maltodextrine.

6. Composition séchée par pulvérisation suivant la revendication 1, qui comprend de 0,01 à 50% d'un plastifiant choisi dans le groupe constitué d'un mono- et d'un disaccharide.

7. Composition séchée par pulvérisation suivant la revendication 5, qui comprend de 0,01 à 50% d'un plastifiant choisi dans le groupe constitué d'un mono- et d'un disaccharide.

8. Composition séchée par pulvérisation suivant la revendication 1, qui comprend de 1 à 30% en poids d'un émulsifiant, relativement au poids séché de la composition.

9. Composition séchée par pulvérisation suivant la revendication 1, dans laquelle l'ingrédient actif est un ingrédient parfumant.

10. Composition séchée par pulvérisation suivant la revendication 1, dans laquelle l'ingrédient actif est un ingrédient aromatisant.

11. Composition séchée par pulvérisation suivant la revendication 1, comprenant de 1 à 60% d'ingrédient actif relativement au poids séché de la composition.

12. Composition séchée par pulvérisation suivant la revendication 11, comprenant de 20 à 50% d'ingrédient actif relativement au poids séché de la composition.

13. Procédé pour la préparation d'un produit particulaire, comprenant les étapes:
a) de formation d'une émulsion aqueuse d'un ingrédient actif dispersé dans un support comprenant au moins une matière glucidique formant une paroi et de 1 à 30% d'agar-agar;
b) d'homogénéisation de l'émulsion;
c) de séchage par pulvérisation de l'émulsion pour former un produit particulaire.

14. Procédé suivant la revendication 13, dans lequel l'étape c) est réalisée en employant un appareil de séchage par pulvérisation équipé avec une buse de pression.

15. Procédé suivant la revendication 13, dans lequel le produit particulaire formé dans l'étape c) est en outre encapsulé.

16. Procédé suivant la revendication 15, dans lequel l'encapsulation consiste à extruder le produit particulaire dans une matrice vitreuse pour former un système de relargage granulaire.

17. Système de relargage granulaire pouvant être obtenu par un procédé suivant la revendication 16.

18. Procédé suivant la revendication 15, dans lequel l'encapsulation consiste à sécher par pulvérisation le produit particulaire dans le but de former une poudre séchée par pulvérisation à étapes multiples.

19. Poudre séchée par pulvérisation à étapes multiples pouvant être obtenue par un procédé suivant la revendication 18.

20. Procédé pour l'aromatisation d'un produit alimentaire ou à boire, qui comprend l'ajout d'une composition séchée par pulvérisation suivant la revendication 10 audit produit alimentaire ou à boire.

21. Procédé pour l'aromatisation d'un produit alimentaire ou à boire, qui comprend l'ajout d'un système de relargage granulaire suivant la revendication 17 audit produit alimentaire ou à boire.

22. Procédé pour améliorer, accroître ou modifier les propriétés de fragrance d'une composition, dans lequel une composition de séchage par pulvérisation suivant la revendication 9 est ajoutée à ladite composition.

23. Produit alimentaire ou à boire, **caractérisé en ce qu'**il comprend une composition suivant la revendication 10.

24. Produit ou article parfumé, **caractérisé en ce qu'**il comprend une composition suivant la revendication 9.

25. Article parfumé suivant la revendication 24, sous la forme d'un détergent en poudre.
